# EUROPÄISCHE PATENTSCHRIFT

(11) **EP 0 768 214 B1**
(45) Veröffentlichungstag und Bekanntmachung des Hinweises auf die Patenterteilung: **10.06.1998**
(21) Anmeldenummer: 96116227.8
(22) Anmeldetag: 10.10.1996
(51) Int. Cl.: B60R 21/06

(54) **Rückhaltevorrichtung, wie z.B. Rückhaltenetz für Kraftwagen**
Restraint system, such as, for example, restraint net for motor cars
Dispositif de retenue, tel que par exemple filet de retenue pour voitures automobiles

(30) Priorität: 11.10.1995 DE 19537769
(43) Veröffentlichungstag der Anmeldung: 16.04.1997
(73) Patentinhaber: PETER BUTZ GmbH & Co Verwaltungs-KG, 40764 Langenfeld (DE)
(72) Erfinder: Labeur, Luc, 3010 Kessel - Lo (BE)
(74) Vertreter: Patentanwälte Ostriga & Sonnet

(56) Entgegenhaltungen:
- EP-A- 0 642 955
- EP-A- 0 672 557
- DE-A- 2 729 877
- DE-A- 4 229 849
- GB-A- 2 111 439

## Beschreibung

Die Erfindung betrifft eine Rückhalte- bzw. Trennvorrichtung entsprechend dem Oberbegriff der Ansprüche 1 und 2. Eine solche Rückhalte- bzw. Trennvorrichtung ist in der EP-0 672 557 A1 beschrieben. Hinreichend bekannt, jedoch in der EP-0 672 557 A1 nicht beschrieben, ist die Befestigung des unteren Befestigungsrandes an den kraftwagenseitigen Befestigungsstellen.

Bislang ist es üblich, den unteren Befestigungsrand einer Rückhalte- oder Trennvorrichtung mit zwei oder drei Spanngurten, denen jeweils eine Spannschnalle zugeordnet ist, nach unten zum Karosserieboden hin zu verspannen. Hierbei wird es als nachteilig empfunden, daß eine nach unten hin wirkende gleichmäßige Zugspannung nur sehr umständlich zu erzielen ist. Eine solche vergleichbare Befestigungsart ist im Zusammenhang mit einer einen geschlossenen Rahmen aufweisenden Rückhaltevorrichtung in der DE-16 80 142 A1 (s. dort Fig. 3) beschrieben.

Weiterhin ist aus der EP-A-642 955, siehe Figur 10, ein Rückhaltenetz bekannt, bei dem ein Zugmittel (Spannseil) entlang der Außenkontur des Netzes verläuft und über das verspannbare Zugmittel an der Karosserie festgelegt ist.

Ausgehend von der bekannten Rückhalte- bzw. Trennvorrichtung gemäß der EP-0 672 557 A1, liegt der Erfindung die Aufgabe zugrunde, eine Rückhalte- bzw. Trennvorrichtung zu schaffen, deren unterer Befestigungsrand sowohl in einfacherer als auch in gleichmäßigerer Weise als bisher und darüber hinaus weitestgehend unabhängig von der jeweiligen Position der kraftwagenseitigen Befestigungsstellen sicher verspannbar ist.

Diese Aufgabe wird entsprechend der Erfindung durch die Merkmale der Ansprüche 1 bzw. 2 gelöst.

In der einfachsten erfindungsgemäßen Ausführungsform sind die beiden oberen Endbereiche des einzigen Zugmittels an den einander diametral gegenüberliegenden Enden des unteren Befestigungsrandes befestigt. Jeweils von diesen beiden oberen Endbereichen ausgehend, verläuft das Zugmittel durch je eine eine Umlenköse bildende kraftwagenseitige Befestigungsstelle, worauf beide unteren Endbereiche des Zugmittels über das Spannmittel gegebenenfalls miteinander verbunden und gegeneinander verspannbar sind.

Je nach Lage der kraftwagenseitigen Befestigungsstellen kann es genügen, den unteren Befestigungsrand tragstangenlos auszubilden. Vorzuziehen ist jedoch eine erfindungsgemäße Ausführungsform, bei welcher der untere Befestigungsrand eine Tragstange enthält, die je nach Position der kraftwagenseitigen Befestigungsstellen nicht nur in der Lage ist, Zugkräfte und Biegekräfte sondern ebenfalls auch Druckkräfte aufzunehmen.

Der besondere Vorteil der Erfindung liegt darin, daß es auf höchst einfache und bequeme Weise mit nur einem Zugmittel und mit Betätigung nur eines Spannmittels möglich ist, den unteren Befestigungsrand einer gattungsgemäßen Trennvorrichtung gleichmäßig zu verspannen.

Weitere Erfindungsmerkmale sind den Unteransprüchen zu entnehmen.

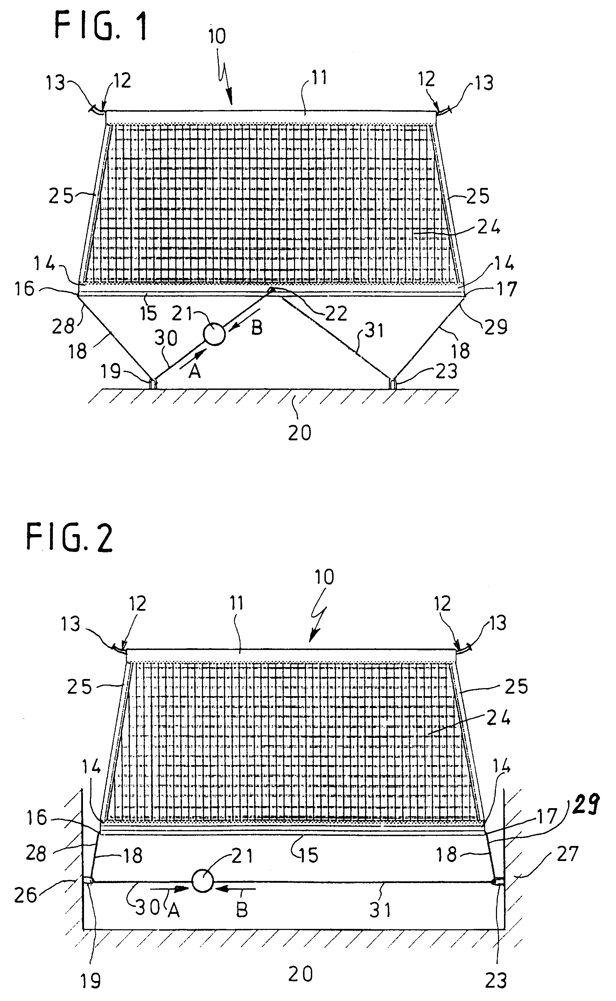

Die Erfindung ist aus den beigefügten schematischen Figuren 1 und 2 zu ersehen, die bevorzugte erfindungsgemäße Ausführungsbeispiele darstellen.

Eine Rückhalte- oder Trennvorrichtung 10 weist einen oberen Befestigungsrand 11 auf, welcher von einer oberen Tragstange 12 axial gänzlich durchsetzt ist, deren für eine lösbare Karosseriebefestigung (nicht dargestellt) vorgesehenen beiden Einhängeenden mit 13 bezeichnet sind.

Die Vorrichtung 10 weist außerdem einen unteren Befestigungsrand 14 auf, welcher ebenfalls in zweckmäßiger Weise versteift ist, insbesondere auf ganzer Länge eine untere Tragstange enthält, die der oberen Tragstange 12 im wesentlichen parallel ist. Die untere Tragstange ist im unteren Befestigungsrand 14 beispielsweise in einer Schlaufe 15 aufgenommen.

Der untere Befestigungsrand 14 bildet beidendig Befestigungsstellen 16, 17, an welchen ein Zugmittel 18, z.B. ein Seil oder ein Gurt, mit seinen beiden oberen Endbereichen 28, 29 angeschlagen, d.h. befestigt, ist. Die unteren Endbereiche des Zugmittels 18 sind mit 30 und 31 bezeichnet.

Von der Befestigungsstelle 17 kommend, ist das Zugmittel 18 durch eine am Karosserieboden 20 befestigte Umlenköse 19 hindurchgeführt, sodann verläuft das Zugmittel 18 durch eine Spannvorrichtung 21 hindurch und von dort durch eine Durchzugsöse 22 im unteren Befestigungsrand 14 oberhalb der nicht gezeigten unteren Tragstange. Von der Durchzugsöse 22 verläuft das Zugmittel 18 durch eine am Karosserieboden 20 befestigte zweite Umlenköse 23 hindurch, um sich von dort aus zur zweiten Befestigungsstelle 17 hin zu erstrecken. Entsprechend den beiden eingezeichneten Pfeilen A und B wird das Zugmittel 18 mittels nur einer einzigen Spannvorrichtung 21 auf ganzer Länge gleichmäßig angespannt. Hierdurch wird die Rückehalte- oder Trennvorrichtung 10 insgesamt auf eine einfache bequeme Weise mit einem Minimum an Seil- oder Gurtelementen in einen gleichmäßigen Spannungszustand versetzt. Selbstverständlich ist es für besondere Anwendungsfälle auch möglich, zwei Spannvorrichtungen 21 in das Zugmittel 18 einzugliedern.

Beim dargestellten Ausführungsbeispiel ist zwischen dem oberen Befestigungsrand 11 und dem unteren Befestigungsrand 14 eine Netzbahn 24 angeordnet, welche in Anpassung an den jeweiligen Anwendungsfall auch durch eine andere Bahn textil- oder folienartiger Natur ersetzt sein kann.

Die Netzbahn 24 ist seitlich mittels Einfassungsstreifen 25 verstärkt.

Die in Fig. 2 dargestellte Ausführungsform unterscheidet sich von der in Fig. 1 dargestellten Ausführungsform nur dadurch, daß die Umlenkösen 19, 23 seitlich an Karosserieseitenwänden 26, 27 befestigt sind. Auch durch die Anordnung gemäß Fig. 2 ist eine erhebliche nach unten wirkende gleichmäßige Zugkomponente einzuleiten, so daß die Rückhalte- oder Trennvorrichtung 10 insgesamt und auf einfacher Weise in einen vorteilhaften gleichmäßigen Spannungszustand versetzt werden kann.

## Patentansprüche

1. Rückhalte- bzw. Trennvorrichtung (10) für Kraftwagen, mit
- einer Rückhaltebahn (24), deren oberer Befestigungsrand (11) mit einer diesen Befestigungsrand (11) axial gänzlich durchsetzenden und innen im Karosserieraum beidendig befestigbaren, insbesondere mittels Einhängeenden (13) einhängbaren, oberen Tragstange (12) versehen ist, und
- an deren der oberen Tragstange (12) parallelem unteren versteiften Befestigungsrand (14), der gegebenenfalls eine untere Tragstange enthält, mindestens ein ein Spannmittel (21) enthaltendes Zugmittel (18), wie Spannseil oder Spanngurt, befestigt ist, welches den unteren Befestigungsrand (14) zu unterhalb des Befestigungsrandes (14) angeordneten kraftwagenseitigen Befestigungsstellen (19, 23) hin anspannt,
dadurch gekennzeichnet, daß
- nur ein Zugmittel (18) vorhanden ist, welches zwei obere Endbereiche (28, 29) und zwei untere Bereiche (30, 31) bildet,
- die beiden oberen Endbereiche (28, 29) des Zugmittels (18) Endabschnitte bilden, die an je einem der beiden diametral gegenüberliegenden Enden (16, 17) des unteren Befestigungsrandes (14) befestigt sind,
- das Zugmittel (18) durch mindestens zwei kraftwagenseitige Befestigungsstellen, welche Umlenkösen (19, 23) bilden, hindurchgeführt ist, und
- die beiden unteren Bereiche (30, 31) des Zugmittels (18) durch das Spannmittel (21) gegeneinanderziehbar sind.

2. Rückhalte- bzw. Trennvorrichtung (10) für Kraftwagen, mit
- einer Rückhaltebahn (24), deren oberer Befestigungsrand (11) mit einer diesen Befestigungsrand (11) axial gänzlich durchsetzenden und innen im Karosserieraum beidendig befestigbaren, insbesondere mittels Einhängeenden (13) einhängbaren, oberen Tragstange (12) versehen ist, und
- an deren der oberen Tragstange (12) parallelem unteren versteiften Befestigungsrand (14), der gegebenenfalls eine untere Tragstange enthält, mindestens ein ein Spannmittel (21) enthaltendes Zugmittel (18), wie Spannseil oder Spanngurt, befestigt ist, welches den unteren Befestigungsrand (14) zu unterhalb des Befestigungsrandes (14) angeordneten kraftwagenseitigen Befestigungsstellen (19, 23) hin anspannt,
dadurch gekennzeichnet, daß
- nur ein Zugmittel (18) vorhanden ist, welches zwei obere Endbereiche (28, 29) und zwei untere Bereiche (30, 31) bildet,
- die beiden oberen Endbereiche (28, 29) des Zugmittels (18) an den beiden diametral gegenüberliegenden Enden (16, 17) des unteren Befestigungsrandes (14) gehalten sind,
- die beiden oberen Endbereiche (28, 29) des Zugmittels (18) über einen vom Zugmittel (18) selbst gebildeten Verbindungsbereich miteinander verbunden sind,
- das Zugmittel (18) durch den unteren Befestigungsrand (14) hindurchgeführt ist,
- das Zugmittel (18) durch mindestens zwei kraftwagenseitige Befestigungsstellen, welche Umlenkösen (19, 23) bilden, hindurchgeführt ist, und
- die beiden unteren Bereiche (30, 31) des Zugmittels (18) durch das Spannmittel (21) gegeneinanderziehbar sind.

3. Rückhalte- bzw. Trennvorrichtung nach Anspruch 2, dadurch gekennzeichnet, daß das Zugmittel (18) durch den einen Längskanal (15) bildenden unteren Befestigungsrand (14) hindurchgeführt ist.

4. Rückhalte- bzw. Trennvorrichtung nach Anspruch 3, dadurch gekennzeichnet, daß das Zugmittel (18) durch eine im unteren Befestigungsrand (14) angeordnete untere Tragstange, die rohrförmig ist, hindurchgezogen ist.

5. Rückhalte- bzw. Trennvorrichtung nach Anspruch 1, dadurch gekennzeichnet, daß die beiden oberen Endbereiche (28, 29) jeweils an einem stirnseitigen Ende (16, 17) des unteren Befestigungsrandes (14) befestigt sind.

6. Rückhalte- bzw. Trennvorrichtung nach Anspruch 5, dadurch gekennzeichnet, daß der untere Befestigungsrand (14) zwischen seinen beiden diametral gegenüberliegenden Enden (16, 17) mindestens eine Durchzugsöse (22) für einen mittleren Bereich des Zugmittels (18) bildet.

## Claims

1. Restraining or separating device (10) for motor vehicles, having
- a restraining web (24) with a top fastening edge (11), which is provided with an upper support rod (12), which axially fully penetrates said fastening edge (11) and is fastenable at both ends, in particular fittable by means of securing ends (13), to the inside of the car body, and
- with a bottom, stiffened fastening edge (14), which is parallel to the upper support rod (12) and optionally comprises a lower support rod and to which at least one tension means (18) such as a tensioning rope or tensioning belt comprising a tightening means (21) is fastened and braces the bottom fastening edge (14) towards fastening points (19, 23) of the motor vehicle disposed below the fastening edge (14),
characterized in that
- only one tension means (18) is provided, which forms two upper end regions (28, 29) and two lower regions (30, 31),
- the two upper end regions (28, 29) of the tension means (18) form end portions which are fastened each to one of the two diametrically opposite ends (16, 17) of the bottom fastening edge (14),
- the tension means (18) passes through at least two fastening points of the motor vehicle, which form guide eyes (19, 23), and
- the two lower regions (30, 31) of the tension means (18) may be drawn towards one another by the tightening means (21).

2. Restraining or separating device (10) for motor vehicles, having
- a restraining web (24) with a top fastening edge (11), which is provided with an upper support rod (12), which axially fully penetrates said fastening edge (11) and is fastenable at both ends, in particular fittable by means of securing ends (13), to the inside of the car body, and
- with a bottom, stiffened fastening edge (14), which is parallel to the upper support rod (12) and optionally comprises a lower support rod and to which at least one tension means (18) such as a tensioning rope or tensioning belt comprising a tightening means (21) is fastened and braces the bottom fastening edge (14) towards fastening points (19, 23) of the motor vehicle disposed below the fastening edge (14),
characterized in that
- only one tension means (18) is provided, which forms two upper end regions (28, 29) and two lower regions (30, 31),
- the two upper end regions (28, 29) of the tension means (18) are held at the two diametrically opposite ends (16, 17) of the bottom fastening edge (14),
- the two upper end regions (28, 29) of the tension means (18) are connected to one another by a connecting region formed by the tension means (18) itself,
- the tension means (18) passes through the bottom fastening edge (14),
- the tension means (18) passes through at least two fastening points of the motor vehicle, which form guide eyes (19, 23), and
- the two lower regions (30, 31) of the tension means (18) may be drawn towards one another by the tightening means (21).

3. Restraining or separating device according to claim 2, characterized in that the tension means (18) passes through the bottom fastening edge (14), which forms a longitudinal channel (15).

4. Restraining or separating device according to claim 3, characterized in that the tension means (18) is drawn through a lower support rod, which is disposed in the bottom fastening edge (14) and is tubular.

5. Restraining or separating device according to claim 1, characterized in that the two upper end regions (28, 29) are fastened in each case to a front end (16, 17) of the bottom fastening edge (14).

6. Restraining or separating device according to claim 5, characterized in that the bottom fastening edge (14) between its two diametrically opposite ends (16, 17) forms at least one eyelet (22) for a middle region of the tension means (18).

## Revendications

1. Dispositif de retenue et/ou de séparation (10) destiné à des véhicules automobiles, comportant :
- une bande de retenue (24) dont la bordure de fixation (11) supérieure est pourvue d'une barre-support supérieure (12), traversant axialement complètement cette bordure de fixation (11) et susceptible d'être fixée aux deux extrémités dans un espace de carrosserie, en particulier susceptible d'être accroché au moyen d'extrémités d'accrochage (13), et
- bande de retenue (24), sur la bordure de fixation inférieure (14), rigidifiée, parallèle à la barre-support supérieure (12) et contenant, le cas échéant, une barre support inférieure, de laquelle est fixé au moins un moyen de traction (18) contenant un moyen de mise sous tension (21), moyen de traction tel qu'un câble de mise sous tension ou une courroie de mise sous tension, qui tend la bordure de fixation inférieure (14) vis-à-vis de points de fixation (19, 23) situés côté véhicule automobile et disposés sous la bordure de fixation (14),
caractérisé en ce qu'
- il n'est prévu qu'un moyen de traction (18) qui constitue deux zones d'extrémité supérieures (28, 29) et deux zones inférieures (30, 31),
- les deux zones d'extrémité supérieures (28, 29) du moyen de traction (18) constituent des tronçons d'extrémité, fixés chacun à l'une des deux extrémités (16, 17) diamétralement opposées de la bordure de fixation inférieure (14),
- le moyen de traction (18) est passé à travers au moins deux points de fixation situés du côté du véhicule automobile, qui constituent des oeillets de déviation (19, 23), et
- les deux zones inférieures (30, 31) du moyen de traction (18) sont susceptibles d'être tirées l'une vers l'autre à l'aide du moyen de mise sous tension (21).

2. Dispositif de retenue et/ou de séparation (10) destiné à des véhicules automobiles, comportant ;
- une bande de retenue (24) dont la bordure de fixation (11) supérieure est pourvue d'une barre-support supérieure (12), traversant axialement complètement cette bordure de fixation (11) et susceptible d'être fixée aux deux extrémités dans un espace de carrosserie, en particulier susceptible d'être accroché au moyen d'extrémités d'accrochage (13), et
- bande de retenue (24), sur la bordure de fixation inférieure (14), rigidifiée, parallèle à la barre-support supérieure (12) et contenant, le cas échéant, une barre support inférieure, de laquelle est fixé au moins un moyen de traction (18) contenant un moyen de mise sous tension (21), moyen de traction tel qu'un câble de mise sous tension ou une courroie de mise sous tension, qui tend la bordure de fixation inférieure (14) vis-à-vis de points de fixation (19, 23) situés côté véhicule automobile et disposés sous la bordure de fixation (14),
caractérisé en ce qu'
- il n'est prévu qu'un moyen de traction (18) qui constitue deux zones d'extrémité supérieures (28, 29) et deux zones inférieures (30, 31),
- les deux zones d'extrémité supérieures (28, 29) du moyen de traction (18) sont fixées aux deux extrémités (16, 17) diamétralement opposées de la bordure de fixation inférieure (14),
- les deux zones d'extrémité supérieures (28, 29) du moyen de traction (18) sont reliées ensemble, par l'intermédiaire d'une zone de liaison constituée par le moyen de traction (18) lui même,
- le moyen de traction (18) est passé à travers la bordure de fixation inférieure (14),
- le moyen de traction (18) est passé à travers au moins deux points de fixation situés du côté du véhicule automobile, qui constituent des oeillets de déviation (19, 23), et
- les deux zones inférieures (30, 31) du moyen de traction (18) sont susceptibles d'être tirées l'une vers l'autre à l'aide du moyen de mise sous tension (21).

3. Dispositif de retenue et/ou de séparation selon la revendication 2, caractérisé en ce que le moyen de traction (18) est passé à travers la bordure de fixation inférieure (14) constituant un canal longitudinal (15).

4. Dispositif de retenue et/ou de séparation selon la revendication 3, caractérisé en ce que le moyen de traction (18) est tiré à travers une barre-support inférieure, disposée dans la bordure de fixation inférieure (14) et présentant une forme tubulaire.

5. Dispositif de retenue et/ou de séparation selon la revendication 1, caractérisé en ce que les deux zones d'extrémité supérieures (28, 29) sont chacune fixées sur une extrémité (16, 17) frontales de bordure de fixation inférieure (14).

6. Dispositif de retenue et/ou de séparation selon la revendication 5, caractérisé en ce que la bordure de fixation inférieure (14) constitue, entre ses deux extrémités (16, 17) diamétralement opposées, au moins un oeillet de passage sous traction (22) destiné à une zone médiane du moyen de traction (18).
